# EUROPEAN PATENT APPLICATION

(11) **EP 3 184 967 A1**
(43) Date of publication of application: **28.06.2017**
(21) Application number: 15003662.2
(22) Date of filing: 23.12.2015
(51) Int. Cl.: G01D 4/00, H04W 4/00

(54) **ELECTRONIC METER**

(71) Applicant: Elster Solutions GmbH, 55252 Mainz-Kastel (DE)
(72) Inventor: Dependahl, Peter, 81477 Munich (DE); Suta, Valentin, 300323 Timisoara (RO); Nicorescu, Ionut, 300716 Timisoara (RO); Timar, Lucian, 307160 Dumbravita (RO); Vetres, Ovidiu, 300386 Timisoara (RO)
(74) Representative: Eickmeyer, Dietmar

(57) **Abstract**

The invention is related to an electronic meter (12, 50) for a measurand (16, 44), in particular for electricity, gas, water or heat, comprising:
• input means for measurement data (20, 48) of at least one sensor device (18, 46) to be connected into a supply line (14, 42) for continuously determining the actual flow of a measurand (16, 44) to be metered there through,
• a controller (22),
• counting means for integrating the flow of the measurand (16, 44) over the time, so that the consumption of the measurand within a respective time span is determinable.

The electronic meter is further comprising:
• a memory (30, 32), wherein the controller is foreseen to write repeatedly data of the respective consumption of the measurand (16, 44) into the memory (30, 32),
• an NFC (Near Field Communication) device (28), which is foreseen to provide data stored within the memory (30, 32) to an external communication device (36, 52).

## Description

The invention is related to an electronic meter for a measurand, in particular for electricity, gas, water or heat, comprising input means for measurement data of at least one sensor device to be connected into a supply line for continuously determining the actual flow of a measurand to be metered there through, a controller and counting means for integrating the flow of the measurand over the time, so that the consumption of the measurand within a respective time span is determinable.

It is known, that electronic meters, for example for metering the consumption of electricity, gas, water or heat, are widely used in supply systems in order to determine the respective consumption of respective customers concerning their supply with electricity, gas, water or heat for example. Typically a respective sensor device is foreseen within a supply line for the supply medium in order to determine the flow of the measurand there through. In case of electricity this might be a current and a voltage sensor which are connected into a supply line for electricity. Based on the measurement data of voltage and current a respective flow of electric power is determinable. In case of gas or water a respective flow sensor is integrated into the supply line respectively into a supply pipe for the supply medium. In case of heat, a pair of thermocouples is typically used to measure the temperature between the outflow and the inflow.

A meter is foreseen to receive measurement data of the sensor device(s) and to integrate those over the time to a respective value describing the consumption of the measurand at the consumer's site, wherein the value describing the consumption is increasing over the time. Typically in certain time intervals the value describing the consumption is read out from the meter in order to account the consumption of the supply medium to the respective customer.

Nowadays meters are typically carried out as electronic meters. Instead of a mechanical counting mechanism an electronic based controller with the capability to execute software program products and to store data in respective registers from memory is foreseen, which is capable of processing the measurement data received based on mathematical algorithms.

Electronic meters require the presence of a supply network for electric energy. During normal operation, the registers from the memory of the electronic meter can be read out locally or remotely on a display of the electronic meter or via integrated communication interfaces. However, there is the need that both, the supplier and the end user respectively consumer, are able to read the meters registers at the meter, even during absence of power supply.

Existing designs of electronic meters rely on additional or enlarged batteries in order to temporarily power up the electronic meter and display the data within its registers from memory shortly or in order to have quick communication session to retrieve data of interest.

Disadvantageously within the state of the art is that batteries are difficult to maintain or replace over time, require additional cost and effort for manufacturing an electronic meter and have a negative impact on the environment.

Based on this state of the art, the objective of the invention is to provide an electronic meter with reduced effort for batteries which is easier to manufacture, easier to read out and more environmentally friendly.

The problem is solved by an electronic meter of the aforementioned kind. This is characterized in that it is further comprising:
- a memory, wherein the controller is foreseen to write repeatedly data - for example when certain events occur (e.g. power-fail event) - of the respective consumption of the measurand into the non-volatile memory of a NFC (Near Field Communication) device,
- a NFC device, which is foreseen to provide data stored within the non-volatile memory to an external communication device.

The basic idea of the invention is to integrate a NFC device into the electronic meter which is foreseen to provide data, in particular data describing the consumption of the measurand to be metered, stored within the electronic meter's memory to an external communication device. The NFC device is connected to the controller, in particular to a meter's application microcontroller (MCU), for example via an available serial interface such as (I2C/SPI/UART). Since no further communication interface like a display or such is required any more for reading out the meter's memory, the energy supply, e.g. battery or external power supply previously dedicated for this function can be removed from the design. Where the battery is used for several functions it will be possible to reduce its size in an advantageous way.

The NFC device shall contain an internal EEPROM (non-volatile memory) for storing metering data, in particular the consumption of a measurand, received from the meter's controller even in case of the outage of the power supply of the electronic meter. An NFC antenna enables communication with external communication devices respectively with devices such as smart phones or tablets equipped with NFC interface and antenna. The antennas mutual coupling will be used for near field communication and may also be used to energize the NFC device inside the meter. A common standard operating frequency for an NFC device is 13.56 MHz.

An NFC antenna may be implemented on a rigid printed circuit board (PCB) or on a flexible PCB of the controller. Depending on various parameters (field strength, antenna geometry), the operating distance range might be up to 100 mm. Immunity against electrostatic discharge (ESD) according to EN61000-4-2 can be gained by using bidirectional ESD protective diodes or other specific protective devices. The NFC device including antenna may be placed on the main meter's PCB or can be fitted as an auxiliary board inside the meter enclosure.

The NFC device shall comprise an internal EEPROM (non-volatile memory) and RAM (volatile memory). Upon power-fail detection of the electronic meter, the controller of the electronic meter is foreseen to store all relevant data on the EEPROM (non-volatile) memory which will be available to the user through NFC readings during the outage of the power supply. This has the advantage of retrieving information from an unpowered electronic meter without using batteries. Examples of useful information, but not limited to this, is the electronic meters serial number, the active energy delivered (kWh) or the volume of gas or liquid (m³) delivered.

In case that the power supply of the meter is active and an external NFC capable device energizes the NFC device inside the meter through inductive coupling of the antennas being in close proximity, an interrupt might be triggered to the meter's application CPU respectively the meter's controller. This might enable a server on the Meter Application CPU which will interact with a corresponding client on the NFC capable external communication device. The communication may take place using the NFC's internal RAM as a buffer. The data available through this method of access might be configurable with a dedicated Meter Configuration Tool. The advantage of this solution is not having the need of adding communication ports for direct reading, such as an optical probe, electrical wired interface or even the display.

Thus it is possible to read out the electronic meters without power supply when in originated use or when not installed, wherein an integrated display or a wired electric interface is not required. The proposed solution also eliminates the batteries for the purpose of reading the meter out without power supply.

Thus according to an embodiment of the invention the NFC device comprises an antenna for communication. Hence it is possible to read out the meter via the antenna of the NFC device without any wired connection. This antenna might also be foreseen - according to a further embodiment of the invention - to energize the NFC device in case of receiving a respective signal from an external transmitter. Thus it is possible to operate the NFC device also in case of an outage of the meter's power supply.

The operating frequency of the antenna is according to a special embodiment of the invention, in the range of 13 MHz to 14 MHz, in particular 13.56 MHz, which is a common standard frequency for operating NFC devices. The antenna might be placed on the same meter's circuit board with the controller in order to reduce the required space and to facilitate the construction of the meter.

According to another embodiment of the invention the NFC device is also foreseen to receive configuration data and to provide it to the controller so that the received configuration data is stored and considered in the further operational behavior of the electronic meter. Thus the basic configuration parameters of the electronic meter can be adapted by using an external communication interface and the NFC device, so that also for purposes of configuring the electronic meter no display or buttons or the like are required directly at the electronic meter. Thus manufacturing of the electronic meter is simplified therewith.

According to a further embodiment of the invention the electronic meter is foreseen to switch into a configuration mode upon energizing the NFC device by means of the antenna in case that an electric power supply for the electronic meter is active. Energizing the antenna might be done by use of a suitable external transmitter. Thus it is possible to interrupt the normal operation of the meter and to configure its parameters afterwards by use of data transmission to the NFC device.

According to a further embodiment of the invention, from the before mentioned mode the electronic meter is foreseen to switch into a communication mode. Thus a communication path is established using the volatile memory as buffer. A communication protocol is used to collect desired information from the meter, information that can include, but it not limited to, displayable data. In this manner the physical display can be rendered obsolete.

According to another embodiment of the invention the electronic meter is foreseen to switch into a read-out mode in case that no electric power supply for the electronic meter is active. A part of the NFC device memory is non-volatile. Thus it is possible to read out measurement data of consumption even in case of a breakdown of the electronic meter's power supply. From this mode the electronic meter is optionally foreseen to switch into a communication mode to provide data on demand. Energizing of the NFC device is in this case done by use of the antenna of the NFC device and a suitable external transmitter.

According to a further embodiment of the invention the NFC device is foreseen to provide further data within the memory to an external communication device. This could be for example the serial number of the electronic meter, nameplate data or the actual configuration data of the electronic meter.

According to a preferred embodiment of the electronic meter the memory is integrated into the NFC device. Thus it is ensured, that the NFC device has always access to the memory, even in case of an outage of the power supply. The memory typically comprises a non-volatile part, in particular an EEPROM for storing the consumption data and a volatile part, in particular a RAM, as input/output buffer for configuration data and data transfer received/sent via the antenna.

According to a further embodiment of the invention the electronic meter does not need a wired communication interface and/or a battery to temporarily power up the meter in case of the absence of an electric power supply. Due to the NFC device a communication with the electronic meter does not require necessarily the presence of a display or a wired communication interface for data exchange. When energizing the NFC device via the antenna by use of an external transmitter, a battery or an external power supply becomes obsolete for securely reading out the electronic meter in case of an outage of the electronic meters power supply.

According to another embodiment of the invention it comprises an external communication device for communication with the NFC device. Thus NFC device is part of the electronic meter itself so that a communication is enabled in-between the components of the meter. According to a further embodiment of the invention the external communication device comprises a transmitter for energizing the NFC device. Thus the same external communication device can be used for receiving data from the meter, sending data thereto and for energizing the NFC device. The handling of the electronic meter is facilitated therewith.

According to a preferred embodiment of the invention the external communication device is mobile phone with NFC capability. Such a device is suitable to read the above mentioned data from the electronic meter and to store it securely in an internal memory or database. The data can be uploaded upon request from the database to the service provider or the end user network, for example.

Further advantageous embodiments of the invention are mentioned in the dependent claims.

The invention will now be further explained by means of an exemplary embodiment and with reference to the accompanying drawings, in which:
- Figure 1: shows a measurement system with electronic meter,
- Figure 2: shows measurement system with electronic meter and reporting into the cloud and
- Figure 3: shows exemplary flow and consumption of measurand.

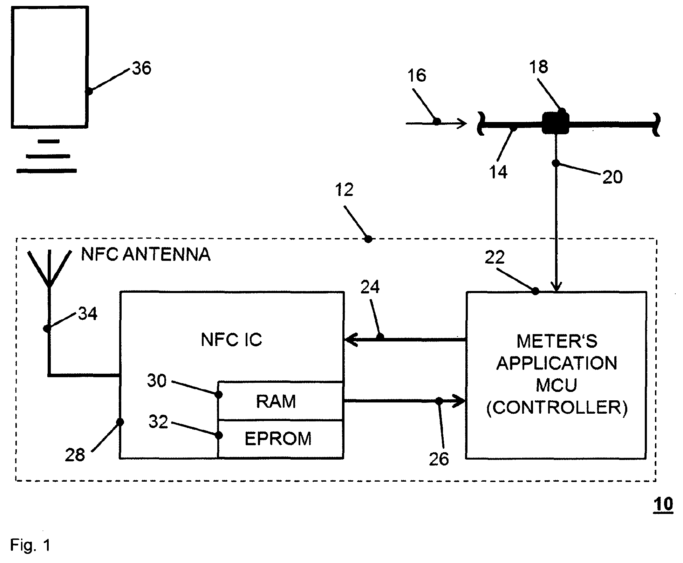

Figure 1 shows an exemplary measurement system 10 with an electronic meter 12. A measurand 16, in this case water, is flowing through a supply line 14, in this case a pipe. A sensor device 18 for determining the flow of the measurand 16 is connected into the supply line 14 and is continuously providing measurement data 20 to a controller 22 of the electronic meter 12. The measurement data 20 describe the actual flow of the measurand 16.

The controller 22 of the electronic meter 12 is comparable with a computing device and comprises counting means for continuously integrating the flow of the measurand 16 over the time, so that the consumption of the measurand 16 within a respective time span is determined therewith.

The controller 22 is foreseen to write repeatedly and / or at power failure measurement data 24 of the respective consumption of the measurand 16 into a non-volatile memory 32 of a NFC device 28, which is integrated into the electronic meter 12. The NFC device further comprises an NFC antenna 34 and is foreseen to provide data stored within the non-volatile memory 32 to an external communication device 36, in this case a mobile phone with NFC capability. A suitable distance in-between the external communication device 36 and the NFC antenna 34 in order to ensure a safe communication might be in the range of 100mm at maximum.

The NFC device 28 is also foreseen to receive data from the external communication device 36 and to buffer it into an NFC internal volatile memory 30. The NFC device 28 is foreseen to provide the data received, in particular configuration data 26, from the volatile memory 30 to the controller 22. Thus the configuration data 26 is stored and considered in the further operational behavior of the controller 22 respectively the electronic meter 12.

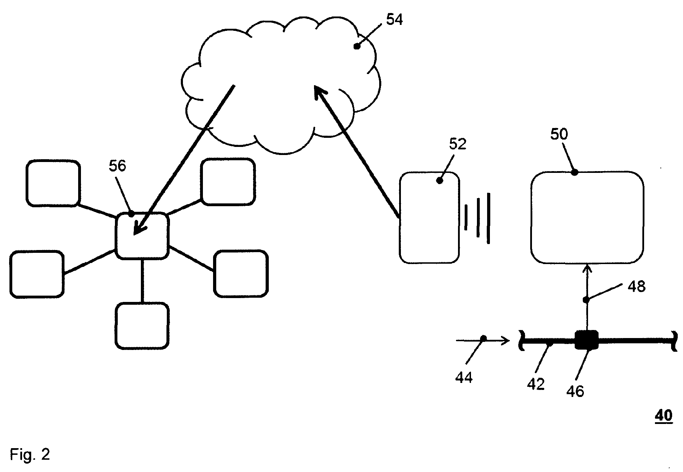

Figure 2 shows in a sketch 40 an exemplary measurement system with electronic meter 50 and reporting of the metered data of consumption into a cloud 54.

A measurand 44, in this case a gas, is flowing through a supply line 42, in this case a pipe. A sensor device 46 for determining the flow of the measurand 44 is connected into the supply line 42 and is continuously providing measurement data 48 describing the gas flow to a controller of the electronic meter 50, which is deriving the consumption of the measurand 44 over the time therefrom.

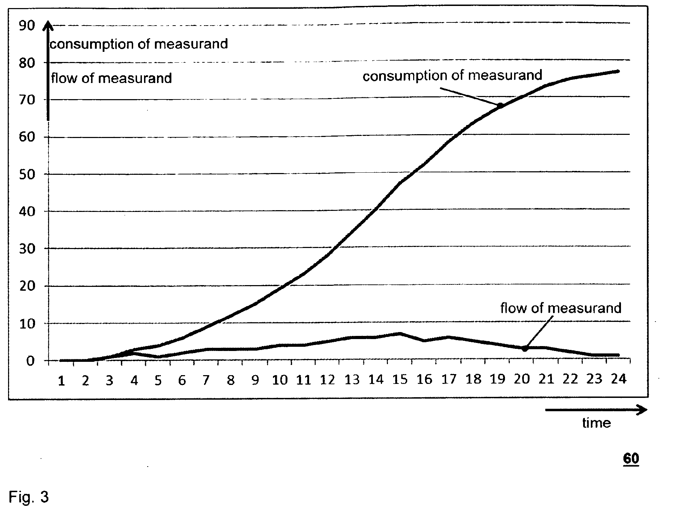

The electronic meter 50 comprises a not shown NFC device and provides data of the consumption of the measurand 44 to an external communication device 52, in this case a mobile phone, which is connected with a memory storage within a cloud 54, so that the data of the consumption is stored in the memory of the cloud 54. A computing device 56 is foreseen to read the data of the consumption from the cloud 54 and to make further analysis based thereon, for example for the purpose of an automatic accounting of the consumption of the measurand for a respective consumer. In order to enable a relationship in-between the electronic meter 50 and the related customer also the serial number of the electronic meter 50 is provided into the cloud 54. Figure 3 shows an exemplary flow and consumption of a measurand over the time. At a reference point of time, in this case marked with "1", the consumption of the measurand is considered to be zero. For all points of times after the reference point of time the flow of the measurand is determined and integrated from the reference point of time to the respective actual point of time, so that for each subsequent point of time an actual overall consumption of the measurand is provided, which is continuously increasing.

### List of reference signs

- 10: measurement system with electronic meter
- 12: electronic meter
- 14: supply line
- 16: measurand
- 18: sensor device
- 20: measurement data
- 22: controller
- 24: measurement data of consumption
- 26: configuration data
- 28: NFC device
- 30: volatile part of memory
- 32: non-volatile part of memory
- 34: antenna
- 36: external communication device
- 40: measurement system with electronic meter and reporting into the cloud
- 42: supply line
- 44: measurand
- 46: sensor device
- 48: measurement data
- 50: electronic meter
- 52: external communication device
- 54: cloud
- 56: computing device
- 60: exemplary flow and consumption of measurand

## Claims

1. Electronic meter (12, 50) for a measurand (16, 44), in particular for electricity, gas water or heat, comprising:
• input means for measurement data (20, 48) of at least one sensor device (18, 46) to be connected into a supply line (14, 42) for continuously determining the actual flow of a measurand (16, 44) to be metered there through,
• a controller (22),
• counting means for integrating the flow of the measurand (16, 44) over the time, so that the consumption of the measurand within a respective time span is determinable,
**characterized in that**
the electronic meter is further comprising:
• a memory (30, 32), wherein the controller is foreseen to write repeatedly data of the respective consumption of the measurand (16, 44) into the memory (30, 32),
• an NFC (Near Field Communication) device (28), which is foreseen to provide data stored within the memory (30, 32) to an external communication device (36, 52).

2. Electronic meter according to claim 1, **characterized in that** the NFC device (28) comprises an antenna (34) for communication.

3. Electronic meter according to claim 2, **characterized in that** the antenna (34) is additionally foreseen to energize the NFC device (28) in case of receiving a respective signal from an external transmitter.

4. Electronic meter according to claim 2 or 3, **characterized in that** the operating frequency of the antenna (34) is in the range of 13 MHz to 14 MHz, in particular 13.56 MHz.

5. Electronic meter according to any of claims 2 to 4, **characterized in that** the antenna (34) is connected to a circuit board of the controller (22).

6. Electronic meter according to any of claims 2 to 5, **characterized in that** the NFC device (28) is foreseen to receive configuration data and to provide it to the controller (22) so that the received configuration data is stored and considered in the further operational behavior of the electronic meter.

7. Electronic meter according to claim 6, **characterized in that** it is foreseen to switch into a configuration mode upon energizing the NFC device (28) by means of the antenna (34) in case that an electric power supply for the electronic meter is active, wherein from this mode the electronic meter is optionally foreseen to switch into a communication mode to provide data on demand.

8. Electronic meter according to any of the preceding claims, **characterized in that** it is foreseen to switch into a read-out mode in case that no electric power supply for the electronic meter is active.

9. Electronic meter according to claim 8, **characterized in that** at least a part of the memory (30, 32) is non-volatile.

10. Electronic meter according to any of the preceding claims, **characterized in that** the NFC device (28) is foreseen to provide further data within the memory (30, 32) to an external communication device (36, 50).

11. Electronic meter according to any of the preceding claims, **characterized in that** the memory (30, 32) is integrated in the NFC device (28).

12. Electronic meter according to any of the preceding claims, **characterized in that** it does not comprise a display and/or a wired communication interface and/or a battery to temporarily power up the meter in case of the absence of an electric power supply, for the purpose of reading out meter data.

13. Electronic meter according to any of the preceding claims, **characterized in that** it comprises an external communication device (36, 50) for communication with the NFC device (28).

14. Electronic meter according to claim 13, **characterized in that** the external communication device (36, 50) comprises a transmitter for energizing the NFC device (28).

15. Electronic meter according to claim 13 or 14, **characterized in that** the external communication device (36, 50) is mobile phone with NFC capability.
